# EUROPEAN PATENT APPLICATION

(11) **EP 4 804 508 A1**
(43) Date of publication of application: **09.09.2026**
(21) Application number: 26160551.3
(22) Date of filing: 25.02.2026
(51) Int. Cl.: H04N 1/00, G06F 3/0484, H04L 12/28, H04N 1/32, H04N 1/44

(54) **TRANSMISSION APPARATUS, IMAGE FORMING APPARATUS, AND METHOD FOR CONTROLLING TRANSMISSION APPARATUS WITH SELECTED DESTINATION CONFIRMATION MECHANISM**

(30) Priority: 05.03.2025 JP 2025034895
(71) Applicant: Sharp Kabushiki Kaisha, Sakai City, Osaka 590-8522 (JP)
(72) Inventor: NODA, Shoji, Osaka, 590-8522 (JP)
(74) Representative: Müller Hoffmann & Partner

(57) **Abstract**

A transmission apparatus includes a display that displays a selection screen accepting a selection instruction of a destination of a transmission job, and one or more controllers that control enabling and disabling of a confirmation function for the destination selected via the selection screen. When the confirmation function is disabled and the selection instruction of the destination is accepted within a predetermined time after display of the selection screen, the one or more controllers change the confirmation function from disabled to enabled.

## Description

### BACKGROUND OF THE INVENTION

### Field of the Invention

The present disclosure relates to a transmission apparatus and the like.

### Description of the Background Art

A facsimile apparatus that prevents mis-transmission during facsimile transmission is known.

### SUMMARY OF THE INVENTION

An object of the present disclosure is to provide a transmission apparatus and the like capable of preventing mis-transmission of a transmission job and ensuring usability.

To solve the above problem, a transmission apparatus according to the present disclosure includes a display that displays a selection screen accepting a selection instruction of a destination of a transmission job, and one or more controllers that control enabling and disabling of a confirmation function for the destination selected via the selection screen. When the confirmation function is disabled and the selection instruction of the destination is accepted within a predetermined time after display of the selection screen, the one or more controllers change the confirmation function from disabled to enabled.

Further, an image forming apparatus according to the present disclosure includes a display that displays a selection screen accepting a selection instruction of a destination of a transmission job, and one or more controllers that control enabling and disabling of a confirmation function for the destination selected via the selection screen. The one or more controllers include the transmission apparatus that changes the confirmation function from disabled to enabled when the confirmation function is disabled and the selection instruction of the destination is accepted within a predetermined time after display of the selection screen, and an image processing apparatus that processes an image to be transmitted by the transmission apparatus.

Further, a method for controlling a transmission apparatus according to the present disclosure is a method for controlling a transmission apparatus that displays a selection screen accepting a selection instruction of a destination of a transmission job and controls enabling and disabling of a confirmation function for the destination selected via the selection screen. When the confirmation function is disabled and the selection instruction of the destination is accepted within a predetermined time after display of the selection screen, the confirmation function is changed from disabled to enabled.

According to the present disclosure, it is possible to provide a transmission apparatus and the like capable of preventing mis-transmission of a transmission job and ensuring usability.

### BRIEF DESCRIPTION OF THE DRAWINGS

FIG. 1 is an external perspective view illustrating an overall configuration of a multifunction peripheral according to a first embodiment.
FIG. 2A is a diagram illustrating a device configuration of an image forming apparatus according to the first embodiment.
FIG. 2B is a diagram illustrating a functional configuration of the image forming apparatus according to the first embodiment.
FIG. 3 is a flowchart illustrating a flow of processing according to the first embodiment.
FIG. 4 is a diagram illustrating an operation example according to the first embodiment.
FIG. 5 is a diagram illustrating an operation example according to the first embodiment.
FIG. 6A is a diagram illustrating an operation example according to the first embodiment.
FIG. 6B is a diagram illustrating an operation example according to the first embodiment.
FIG. 7 is a diagram illustrating an operation example according to the first embodiment.
FIG. 8 is a diagram illustrating an operation example according to the first embodiment.
FIG. 9 is a diagram illustrating an operation example according to the first embodiment.
FIG. 10 is a flowchart illustrating a flow of processing according to a second embodiment.
FIG. 11 is a diagram illustrating an operation example according to the second embodiment.
FIG. 12 is a flowchart illustrating a flow of processing according to a third embodiment.
FIG. 13 is a diagram illustrating an operation example according to the third embodiment.
FIG. 14 is a flowchart illustrating a flow of processing according to a fourth embodiment.

### DESCRIPTION OF THE PREFERRED EMBODIMENTS

Hereinafter, embodiments of the present disclosure will be described with reference to the drawings. Note that the following embodiments are examples for describing the present disclosure, and the technical contents of the description described in the claims are not limited to the following description.

For example, a mechanism for preventing mis-transmission to an incorrect transmission destination at the time of execution of a transmission job such as E-mail transmission or fax transmission is known.

One conventional technique discloses a facsimile apparatus that prevents mis-transmission by displaying a destination confirmation screen for a predetermined time during facsimile transmission to give a user an opportunity to reconfirm a transmission destination.

However, since the destination confirmation screen is always displayed for a predetermined time every time facsimile transmission is performed, it is troublesome for the user.

In the present disclosure, by controlling enabling/disabling of a function for making the user confirm the selected destination (hereinafter, referred to as a destination confirmation function in the present disclosure) according to whether or not mis-selection of the destination is assumed, a transmission apparatus and the like capable of preventing mis-transmission of a transmission job and ensuring usability are realized in the following embodiments.

### 1 First Embodiment

In a first embodiment, a mode of a transmission apparatus will be described in which when a destination confirmation function as a confirmation function is disabled and a selection instruction of a destination is accepted within a predetermined time after display of an address book screen as a selection screen, the destination confirmation function is changed from disabled to enabled.

### 1.1 Functional Configuration

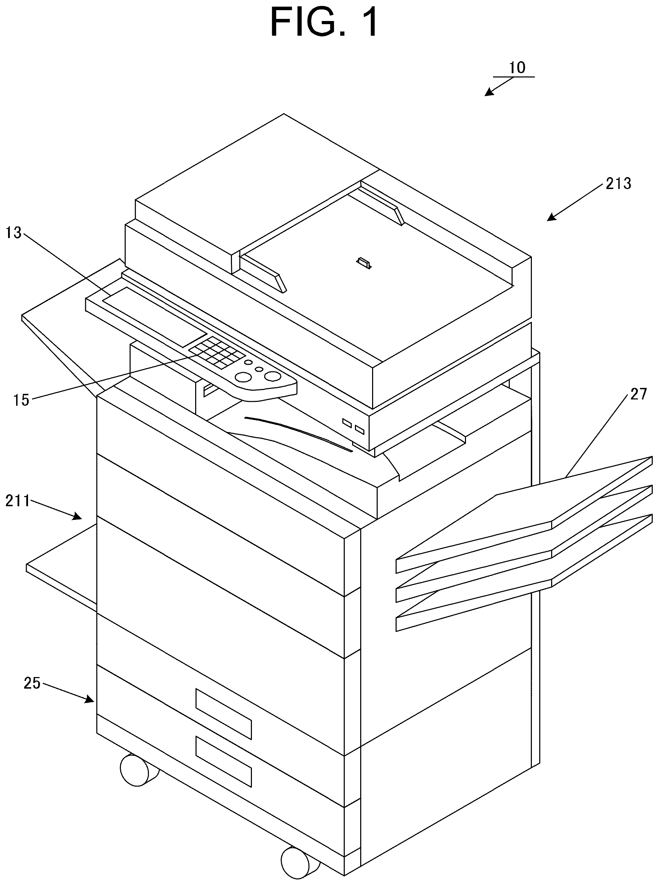

FIG. 1 is a diagram illustrating an overall configuration of an image forming apparatus 100 on which a transmission apparatus 103 according to the first embodiment is mounted. In the first embodiment, a form of a multifunction peripheral will be described as an example of the image forming apparatus 100, but the image forming apparatus 100 is not particularly limited as long as it has a configuration on which the transmission apparatus 103 according to the first embodiment is mounted, and may be, for example, a printer, a copier, a fax machine, or the like in which each type of job function is limited.

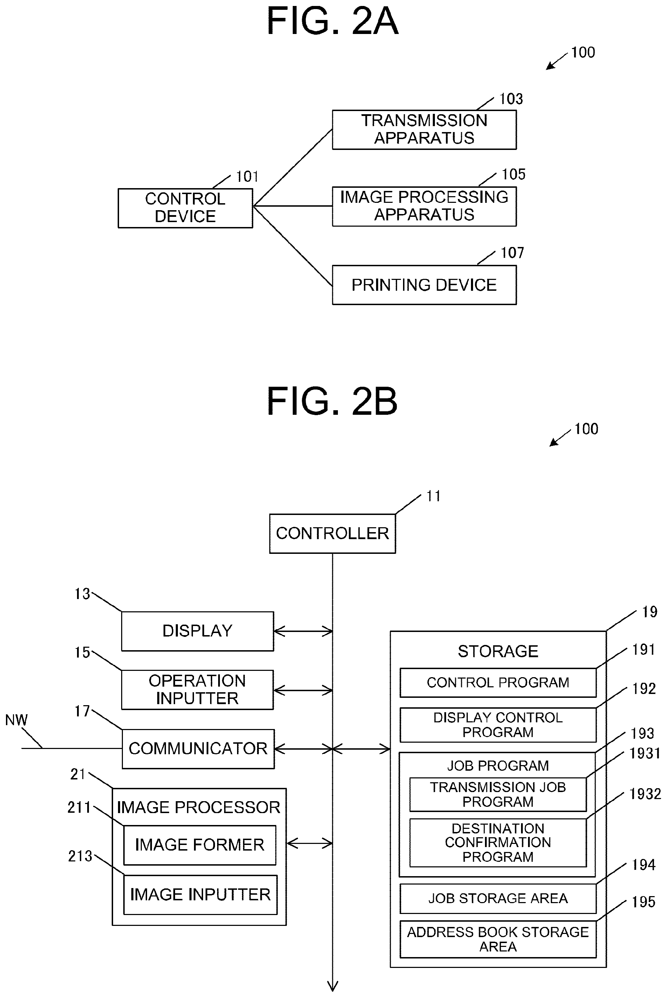

FIG. 2A is a diagram illustrating a device configuration of the image forming apparatus 100. The image forming apparatus 100 has a control device 101, the transmission apparatus 103, and an image processing apparatus 105. Each device illustrated in FIG. 2A may be formed integrally, or may be configured by combining a plurality of devices. For example, the image processing apparatus 105 and a printing device 107 may be one device.

FIG. 2B is a diagram illustrating a functional configuration of the image forming apparatus 100. Each function illustrated in FIG. 2B may be provided as necessary by each device illustrated in FIG. 2A.

The image forming apparatus 100 includes a controller 11, a display 13, an operation inputter 15, a communicator 17, a storage 19, and an image processor 21 as a functional configuration.

The controller 11 comprehensively controls the image forming apparatus 100. The controller 11 can be configured by one or a plurality of arithmetic units (Central Processing Unit (CPU), Digital Signal Processor (DSP), etc.). The controller 11 realizes various functions performed by the image forming apparatus 100 by reading and executing various programs stored in the storage 19. Note that the controller 11 may be configured as a System on a Chip (SoC) having a plurality of functions among the functions described below. Further, the controller 11 may be configured by one or a plurality of control circuits.

The display 13 can be configured by a display device such as a liquid crystal display (LCD), an organic Electro-Luminescence (EL) display, a micro LED display, or a mini LED display capable of displaying various information to a user or the like.

The operation inputter 15 accepts input of an operation or input of information from a user or the like. The operation inputter 15 can be configured by various input devices such as operation keys such as hard keys and software keys, and buttons, for example. Further, the operation inputter 15 can be configured as a touch panel display capable of input via the display 13. In this case, as an input method to the touch panel display, for example, a resistive film method, an infrared method, an electromagnetic induction method, a capacitive method, or the like can be adopted.

The communicator 17 includes a wired/wireless network communication interface for communicating with other terminal devices such as a PC via a network NW such as a Local Area Network (LAN), a Wide Area Network (WAN), the Internet, a telephone line, or a fax line, for example. Note that the wireless network communication interface may include, for example, an interface for short-range wireless communication such as Bluetooth (registered trademark), Wi-fi (registered trademark), or IrDA.

The storage 19 is one or a plurality of storage devices that store various programs necessary for the operation of the image forming apparatus 100 and various data. The storage 19 can be configured by a storage device such as a random access memory (RAM), a solid state drive (SSD), a hard disk drive (HDD), or a read only memory (ROM), for example.

In the first embodiment, the storage 19 stores a control program 191, a display control program 192, and a job program 193, and secures a job storage area 194 and an address book storage area 195.

The control program 191 is a program read by the controller 11 when comprehensively controlling the image forming apparatus 100. The controller 11 that has read the control program 191 controls driving of hardware such as the display 13, the operation inputter 15, the communicator 17, and the image processor 21.

The display control program 192 is a program read by the controller 11 when performing output control of a screen displayed on the display 13 or the operation inputter 15 configured as a touch panel display. The controller 11 that has read the display control program 192 controls display of an operation screen (for example, a job setting screen, an address book screen, a destination confirmation screen, etc.) displayed on the display 13 (operation inputter 15).

The job program 193 is a program read by the controller 11 when executing various jobs such as a print job, a copy job, a scan job, a fax transmission job, or an E-mail transmission job, for example. The controller 11 that has read the job program 193 switches a device mode of the image forming apparatus 100 to a job mode for executing each job, and executes the job for which an execution instruction has been accepted.

The job program 193 according to the first embodiment includes a transmission job program 1931 and a destination confirmation program 1932. The controller 11 that has read the transmission job program 1931 can function as the transmission apparatus 103 by cooperating with the communicator 17, and comprehensively controls a transmission job (hereinafter, referred to as an image transmission job) for transmitting image data to a specific destination such as E-mail transmission, a shared folder, an FTP server or desktop (FTP/desktop), Internet fax transmission, or fax transmission to a destination (transmission destination) selected via an address book stored inside and/or outside the image forming apparatus 100 or a destination (transmission destination) directly input by the user. The controller 11 that has read the destination confirmation program 1932 comprehensively controls switching between enabled and disabled of a function related to confirmation of the destination of the image transmission job selected by the user via the address book screen (destination confirmation function) and the operation of the image forming apparatus 100 in a state where the destination confirmation function is enabled. In the first embodiment, when a destination is selected within a short time (for example, within 500 ms) as a predetermined time by a touch operation or the like by the user after the display of the address book screen, it is determined that there is a high probability that the user has selected an unintended destination, and control is performed to change (switch) the destination confirmation function from disabled to enabled limited to such a case. In the present disclosure, description is made assuming that the predetermined time is 500 ms, but the predetermined time may be, for example, less than 500 ms, or may be a time width longer than 500 ms such as 1 s, 10 s, 30 s, or 1 min. Further, a result of statistically analyzing the time required for mis-selection of a destination or a predetermined time to be applied by machine learning may be obtained. Furthermore, a different predetermined time may be set for each user according to the operation history of the user using the image forming apparatus 100, the frequency of mis-selection of destinations, and the like.

The job storage area 194 is a storage area for storing information necessary for the image forming apparatus 100 to execute an image transmission job (for example, a destination selected by the user via the address book, or scan conditions such as a color mode, a resolution, a format, a document reading side, and a document reading density when the image transmission job is an image transmission job such as E-mail transmission).

The address book storage area 195 is a storage area that stores an address book (directory) managed by the image forming apparatus 100. The controller 11 generates an address book screen for accepting selection of a destination by the user based on address information stored in the address book storage area 195. Note that the address book storage area 195 may be provided in an external server device (not illustrated) or an external terminal device such as a mobile terminal, and the address book screen may be generated based on address information acquired from these devices.

The image processor 21 includes an image former 211 and an image inputter 213. The image former 211 feeds paper from a paper feeder 25, forms an image based on image data on the paper, and then discharges the paper to a paper discharger 27. The image former 211 can be configured by, for example, a laser printer employing an electrophotographic method or the like. In this case, the image former 211 performs image formation using toner supplied from a toner cartridge (not illustrated) corresponding to a toner color (for example, cyan, magenta, yellow, black).

The image inputter 213 generates image data by scanning a document. The image inputter 213 can be configured as a scanner device including, for example, an automatic document feeder (ADF) and a flatbed for placing and reading a document in addition to an image sensor such as a charge coupled device (CCD) or a contact image sensor (CIS). The configuration of the image inputter 213 is not particularly limited as long as it is a configuration capable of reading a reflected light image from a document image with an image sensor. Note that the image inputter 213 can also be configured as an interface capable of acquiring image data stored in a storage medium such as a USB memory, for example, or image data transmitted from a terminal device (not illustrated). Note that the image processor 21 may be in a form of generating image data for image transmission by performing, for example, shading correction or density correction on the image data input from the image inputter 213.

When each device of the control device 101, the transmission apparatus 103, the image processing apparatus 105, and the printing device 107 realizes a function individually, each function described above may be provided redundantly. For example, the transmission apparatus 103, the image processing apparatus 105, and the printing device 107 may each have the controller 11 or the storage 19. Further, each device may share and use the controller 11, the storage 19, and the like.

### 1.2 Flow of Processing

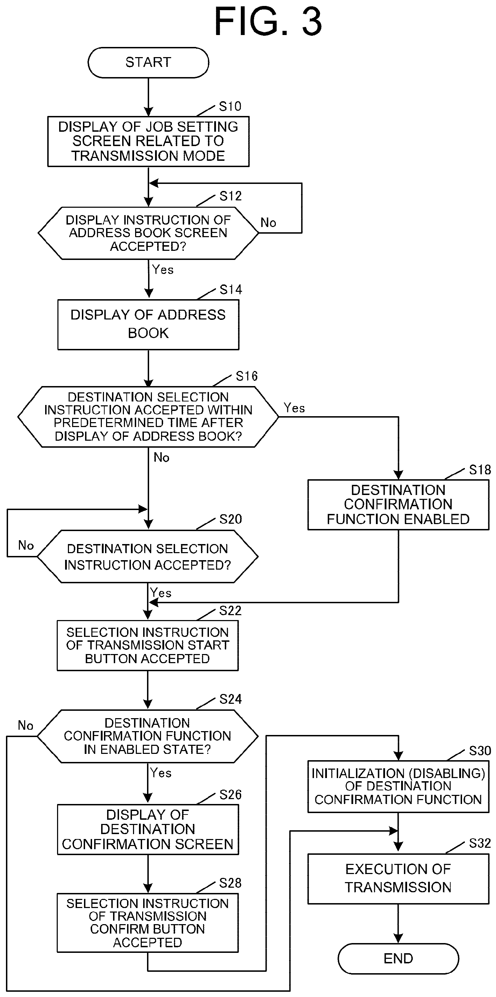

Next, a flow of processing according to the first embodiment will be described using the flowchart of FIG. 3. Note that the processing described in FIG. 3 is described as processing executed by the controller 11 reading the control program 191, the display control program 192, and the job program 193 (transmission job program 1931, destination confirmation program 1932), and the like. Also, in FIG. 3, description is made assuming that the destination confirmation function is set to disabled via a system setting screen (not illustrated) or the like.

When a job mode related to an image transmission job is selected by the user, the controller 11 displays a job setting screen related to the selected image transmission mode (step S10).

The controller 11 determines whether or not a display instruction of an address book screen as a selection screen has been accepted via the job setting screen (step S12). When determining that the display instruction of the address book screen has been accepted, the controller 11 displays the address book screen (step S12; Yes -> step S14). On the other hand, when determining that the display instruction of the address book screen has not been accepted, the controller 11 waits until the display instruction of the address book screen is accepted (step S12; No).

When displaying the address book screen, the controller 11 activates a timer (not illustrated) such as a timer, and determines whether or not a selection instruction of a destination by a touch operation or the like by the user has been accepted within a predetermined time after the display of the address book (step S16). When determining that the selection instruction of the destination has been accepted within the predetermined time after the display of the address book, the controller 11 changes the destination confirmation function from disabled to enabled, and the process proceeds to step S22 (step S16; Yes -> step S18 -> step S22).

On the other hand, when determining that the selection instruction of the destination has not been accepted within the predetermined time after the display of the address book, the controller 11 determines whether or not a selection instruction of a destination by a touch operation or the like by the user has been accepted (step S16; No -> step S20). When determining that the selection instruction of the destination has been accepted, the controller 11 accepts a selection instruction of a transmission start instruction button (step S20; Yes -> step S22). Note that when determining that the selection instruction of the destination has not been accepted, the controller 11 waits until the selection of the destination is accepted (step S20; No).

Next, the controller 11 determines whether or not the destination confirmation function is in an enabled state (step S24). When determining that the destination confirmation function is in the enabled state, the controller 11 displays a destination confirmation screen (step S24; Yes -> step S26).

Then, the controller 11 accepts a selection instruction of a transmission confirm button (a button for confirming execution of the transmission job for the selected destination) provided on the destination confirmation screen by the user (step S28). When accepting the selection instruction of the transmission confirm button, the controller 11 initializes (disables) the destination confirmation function, transmits image data or the like to the destination confirmed by the user, and ends the processing (step S30 -> step S32).

Incidentally, when determining that the destination confirmation function is not in the enabled state, the controller 11 omits the processing of steps S26 to S30, transmits image data or the like to the destination selected by the user, and ends the processing (step S24; No -> step S32).

### 1.3 Operation Example

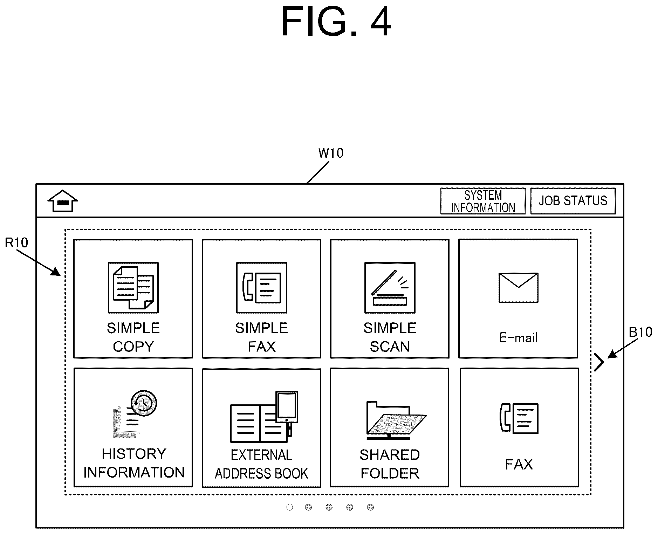

Next, an operation example according to the first embodiment will be described. FIG. 4 is a diagram illustrating an example of a display configuration of a home screen W10 according to the first embodiment. The home screen W10 is a basic screen that is displayed on the display 13 when power is turned on, during standby, when recovering from a sleep mode, or the like, and accepts an operation input by the user. The home screen W10 includes a job function etc. display area R10 and a switching button B10.

The job function etc. display area R10 is an area that aggregates and displays selection (operation) buttons for accepting a selection instruction of each job mode, a display instruction of a history information screen, and the like. Each operation button is configured as a selection button having a screen configuration in which each job mode and various information are illustrated with figures, characters, numbers, symbols, or the like.

FIG. 4 is an example in which the job function etc. display area R10 is configured by a total of eight types of selection buttons: a "Simple Copy" button accepting a selection instruction of a simple copy mode in which a copy mode is simplified; a "Simple Fax" button accepting a selection instruction of a simple fax mode in which a fax mode is simplified; a "Simple Scan" button accepting a selection instruction of a simple scan mode in which a scan mode is simplified; an "E-mail" button; a "History Information" button accepting a display instruction of history information; an "External Address Book" button accepting a display instruction of address information acquired from an external terminal device (not illustrated); a "Shared Folder" button accepting a selection instruction of a shared folder mode for transmitting image data to a specific shared folder; and a "Fax" button.

The switching button B10 is a selection button for accepting a switching instruction of display contents in the job function etc. display area R10. When receiving a selection instruction of the switching button B10 by the user, the controller 11 can switch the display contents in the job function etc. display area R10 by switching the display to selection buttons (not illustrated) representing, for example, FTP/desktop, Internet fax transmission, etc.

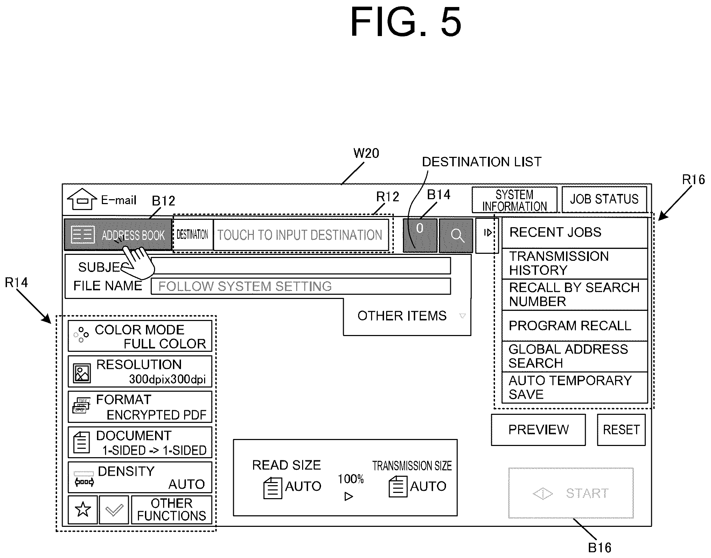

FIG. 5 is a diagram illustrating an example of a display configuration of a job setting screen W20 related to an image transmission job displayed by the controller 11 upon accepting a selection instruction of the "E-mail" button or "Shared Folder" button on the home screen W10.

The job setting screen W20 includes an address book button B12, a destination display area R12, a destination list button B14, a setting value display area R14, an action panel display area R16, and a start button B16 as a transmission start instruction button.

The address book button B12 is a button for accepting a display instruction of an address book (directory) managed by the image forming apparatus 100. When receiving a selection instruction of the address book button B12, the controller 11 displays an address book screen as a selection screen described in the next figure. Note that FIG. 5 represents a state in which the address book button B12 is selected by a touch operation by the user.

The destination display area R12 is an area for accepting a destination selected by the user via the address book screen or direct input of a destination by the user. When detecting a touch operation or the like on the destination display area R12 by the user, the controller 11 can accept input of destination information by the user via a soft key (not illustrated), a hard key, or the like displayed on the display 13.

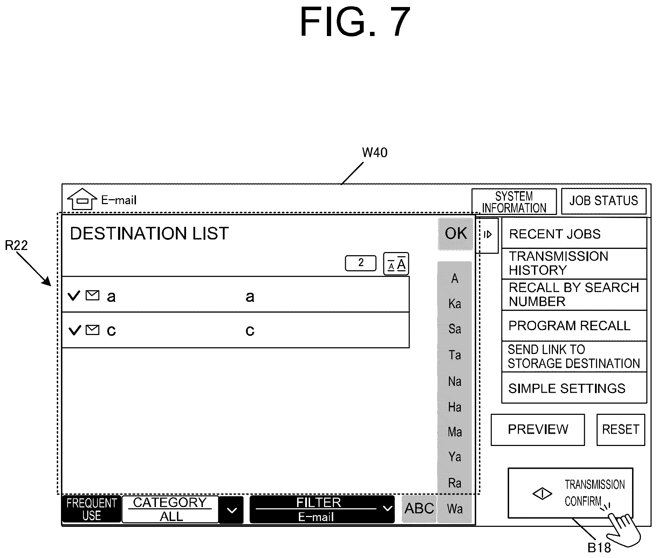

The destination list button B14 is a button for accepting a list display instruction of destinations selected as destinations of the image transmission job. In FIG. 5, since the destination is in an unselected state, the number of destinations "0" is displayed on the destination list button B14. Note that a destination list screen displayed by the controller 11 in response to a selection instruction of the destination list button B 14 can have the same configuration as the destination confirmation screen (FIG. 7) displayed when the destination confirmation function is in the enabled state.

The setting value display area R14 is an area for accepting selection/input of a setting value that can be set by the user via the job setting screen W20. FIG. 5 is an example in which scan conditions (items) related to image transmission such as color mode "Full Color", resolution "300 dpi x 300 dpi", format "Encrypted PDF", document reading side "1-Sided -> 1-Sided", and document reading density "Auto" are displayed in the setting value display area R14.

The action panel display area R16 is an area for displaying functions utilizable in the image transmission mode. FIG. 5 is an example displaying, as functions constituting the action panel display area R16, a "Recent Jobs" button for setting a destination included in a setting history from recent jobs, a "Transmission History" button for setting a destination from a transmission history, a "Recall by Search Number" button for setting a destination from search numbers registered in the address book, a "Program Recall" button accepting a calling instruction of a job program, a "Global Address Search" button for setting a destination searched from a global address book stored outside the image forming apparatus 100, and an "Auto Temporary Save" button for temporarily automatically saving transmitted image data.

The start button B16 is a button for accepting a transmission start instruction related to image transmission. Note that the start button B16 is displayed in a grayed-out state to disable selection by the user when selection of a destination as a transmission destination is not completed.

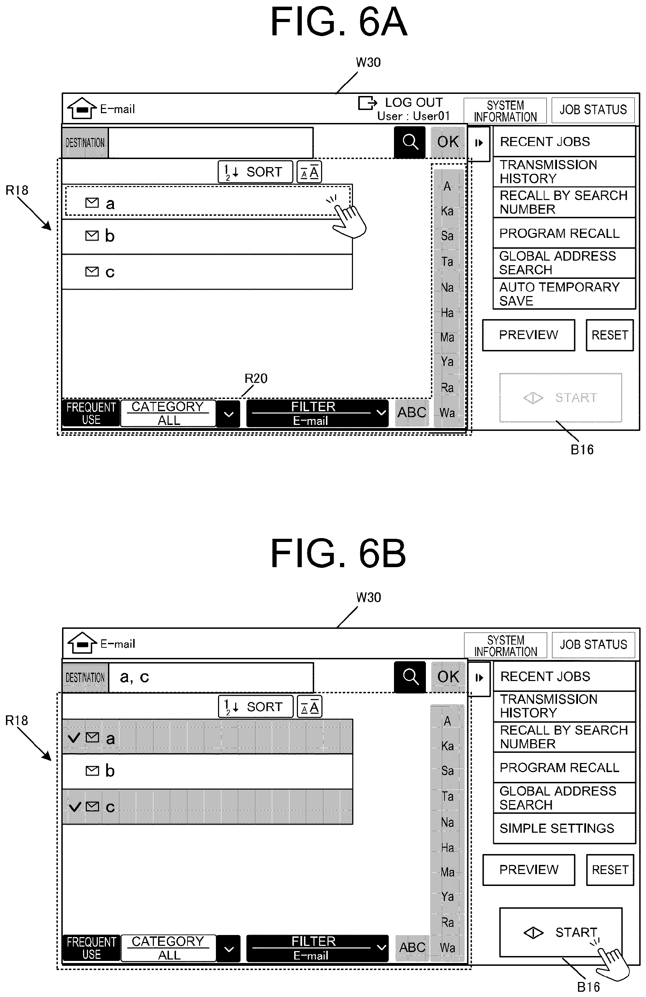

FIG. 6A is a diagram illustrating an example of a display configuration of an address book screen W30 as a selection screen displayed by the controller 11 in response to a selection instruction of the address book button B12 on the job setting screen W20 by the user. Note that FIG. 6A is a diagram representing a state in which a specific destination "a" is being selected by the user via the address book screen W30.

The address book screen W30 includes a selection destination display area R18 and a narrowing-down area R20. The selection destination display area R18 is an area for displaying the address book (directory) managed by the image forming apparatus 100, and in the example of FIG. 6A, represents a state in which three mail addresses a, b, and c are selectable.

The narrowing-down area R20 is an area for accepting a narrowing-down instruction of destinations to be selected, and includes, as narrowing-down conditions, a "Frequent Use" key accepting a narrowing-down instruction by frequent use, a "Category" key accepting a narrowing-down instruction by category such as contact or group, a "Filter" key accepting narrowing-down by job type, a "Japanese Syllabary" key, an "Alphabet" key, and the like, accepting a narrowing-down instruction by index (Japanese syllabary order, alphabetical order, etc.).

FIG. 6B represents a state in which "a" and "c" are selected as destinations in the selection destination display area R18 by the user. When the destination of the image transmission job is selected by the user, the grayed-out display of the start button B16 is released, and selection (transmission start instruction) by the user becomes possible.

When the selection of the destination by the user shown in FIGS. 6A and 6B is performed within the predetermined time, the controller 11 enables the destination confirmation function, determining that there is a high probability of mis-selection of the destination. On the other hand, when the selection of the destination by the user is performed exceeding the predetermined time, that is, when the selection instruction of the destination is not accepted within the predetermined time, the controller 11 maintains disabling of the destination confirmation function.

FIG. 7 is a diagram illustrating an example of a display configuration of a destination confirmation screen W40 displayed by the controller 11 in response to a selection instruction of the start button B16 with the destination confirmation function enabled. The destination confirmation screen W40 includes a destination list display area R22 and a transmission confirm button B18.

The destination list display area R22 is an area for displaying a list of destinations selected by the user in order to prompt confirmation of the destinations. The user can confirm the destinations selected by themselves by referring to the destinations (list) displayed in the destination list display area R22.

The transmission confirm button B18 is a button for accepting a destination confirmation instruction and an image transmission job transmission execution instruction by the user. When receiving a selection instruction of the transmission confirm button B18, the controller 11 executes the image transmission job for the confirmed destination.

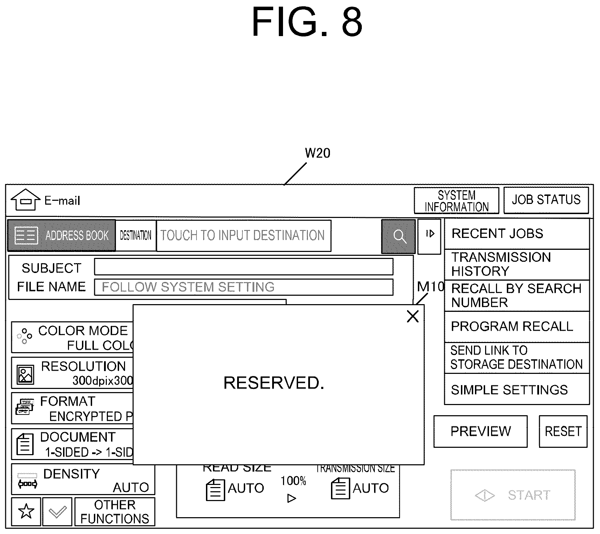

FIG. 8 is a diagram illustrating an example of a display configuration of a message screen M10 displayed by the controller 11 in response to a selection instruction of the transmission confirm button B18 by the user. The controller 11 displays the message screen M10 with message content "Reserved.", and executes the image transmission job for the confirmed destination.

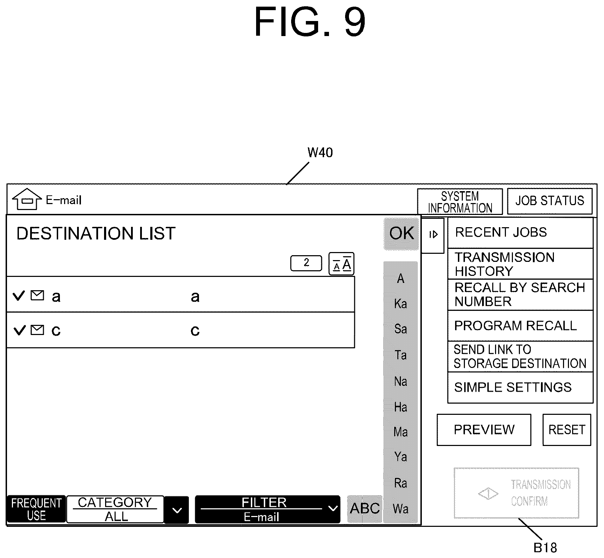

By the way, in FIG. 7, an example of the display configuration of the destination confirmation screen W40 displayed by the controller 11 in response to the selection instruction of the start button B16 with the destination confirmation function enabled has been described. At this time, the transmission confirm button B18 was displayed in an active state so as to be selectable by the user, but as shown in FIG. 9, the transmission confirm button B18 may be displayed in a grayed-out state so as to be unselectable by the user at the display timing of the destination confirmation screen W40. Then, a configuration may be adopted in which the grayed-out display is released after a predetermined display time has elapsed after the display of the destination confirmation screen W40. By restricting selection of the transmission confirm button B18 while the destination confirmation screen W40 is displayed for the predetermined display time, the user's attention can be directed to the destinations displayed on the destination confirmation screen W40 (destination list display area R22).

As described above, according to the first embodiment, when a destination is selected within a predetermined time (for example, within 500 ms) after the display of the address book, it is determined that there is a high probability that the user has selected an unintended destination, and by performing control to change the destination confirmation function from disabled to enabled limited to such a case, it is possible to prevent mis-transmission of the image transmission job and reduce troublesomeness related to the display of the destination confirmation screen.

### 2 Second Embodiment

In a second embodiment, in addition to the configuration of the first embodiment, a form will be described in which when an operation instruction for an intermediate screen displayed from acceptance of the selection instruction of the address book button B12 on the job setting screen W20 until the address book screen W30 is displayed is accepted, and a selection instruction of a destination is accepted within a predetermined time after the display of the address book screen W30, the destination confirmation function is changed from disabled to enabled.

### 2.1 Functional Configuration

A functional configuration according to the second embodiment can be substantially the same as the functional configuration according to the first embodiment, and thus description thereof is omitted here.

### 2.2 Flow of Processing

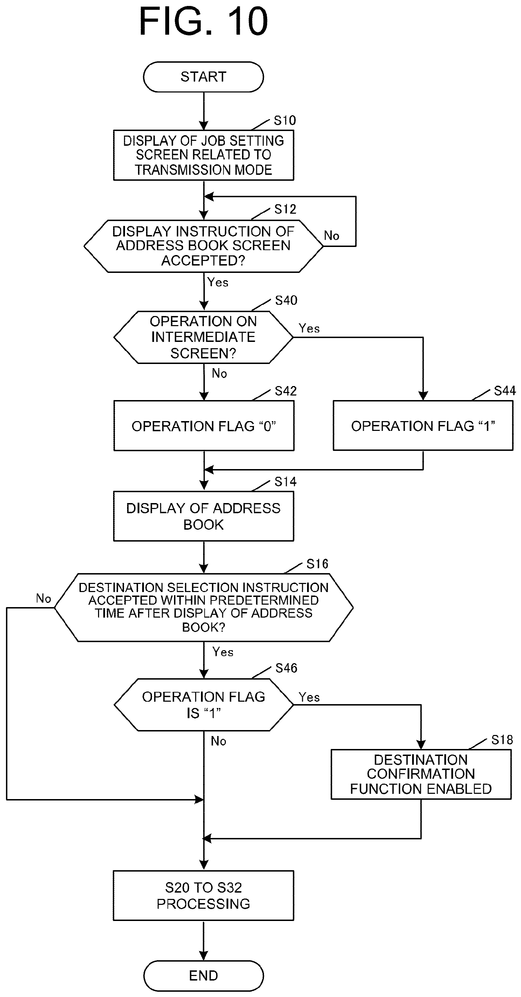

A flow of processing according to the second embodiment will be described using the flowchart of FIG. 10. Note that processing that can be the same processing as the processing described in FIG. 3 of the first embodiment is denoted by the same step number, and description thereof may be omitted.

When determining that the display instruction of the address book has been accepted, the controller 11 determines whether or not there has been a user operation such as a touch operation on an intermediate screen displayed from the job setting screen W20 until the address book screen W30 is displayed (step S40).

When determining that there has been a user operation on the intermediate screen, the controller 11 sets an operation flag value "1" indicating that there has been a user operation to an operation flag (step S40; Yes -> step S44). On the other hand, when determining that there has been no user operation on the intermediate screen, the controller 11 sets an operation flag value "0" indicating that there has been no user operation instruction to the operation flag (step S40; No -> step S42).

Next, the controller 11 displays the address book screen W30 (step S14). When displaying the address book screen W30, the controller 11 activates a timer (not illustrated) such as a timer, and determines whether or not a selection instruction of a destination by a touch operation or the like by the user has been accepted within a predetermined time (for example, 500 ms) after the display of the address book screen W30 (step S16). When determining that the selection instruction of the destination has been accepted, the controller 11 determines whether or not the value of the operation flag is "1" (step S16; Yes -> step S46). When determining that the selection instruction of the destination has not been accepted, the controller 11 omits the processing related to step S46 and executes the processing related to steps S20 to S32 (step S16; No -> processing of steps S20 to S32).

When determining that the value of the operation flag is "1", the controller 11 changes the destination confirmation function from disabled to enabled, and executes the processing related to steps S20 to S32 (step S46; Yes -> step S18 -> processing of steps S20 to S32). On the other hand, when determining that the value of the operation flag is "0" (the value of the operation flag is not "1"), the controller 11 executes the processing related to steps S20 to S32 (step S46; No -> processing of steps S20 to S32).

### 2.2 Operation Example

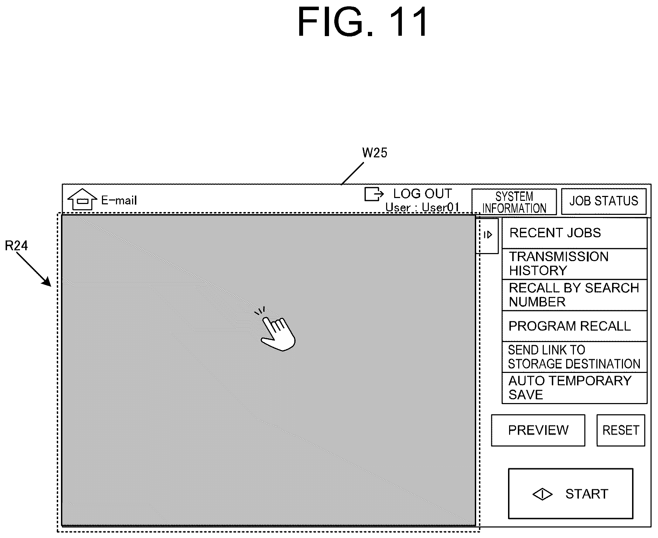

FIG. 11 is a diagram illustrating an operation example according to the second embodiment. An intermediate screen W25 illustrated in FIG. 11 is an intermediate screen displayed from the job setting screen W20 until the address book screen W30 is displayed, and the intermediate screen W25 includes an intermediate screen area R24.

When determining that there has been a user operation on the intermediate screen area R24 while the intermediate screen W25 is displayed, the controller 11 sets an operation flag value "1" indicating that there has been a user operation to the operation flag. Then, when a selection instruction of a destination is accepted within a predetermined time after the display of the address book screen W30, the confirmation function is changed from disabled to enabled.

As described above, according to the second embodiment, in addition to the configuration of the first embodiment, since enabling or disabling of the destination confirmation function is determined according to the presence or absence of a user operation on the intermediate screen W25 displayed from the job setting screen W20 until the address book screen W30 is displayed, the accuracy of the probability of mis-selection of the destination by the user can be further increased.

### 3 Third Embodiment

A third embodiment is a form in which, with respect to the configuration of the first embodiment, when the number of destinations for which selection is accepted within a predetermined time after the display of the address book screen is one, and thereafter a selection instruction for another destination is not accepted, disabling of the destination confirmation function is maintained.

### 3.1 Functional Configuration

A functional configuration according to the third embodiment can be substantially the same as the functional configuration according to the first embodiment, and thus description thereof is omitted here.

### 3.2 Flow of Processing

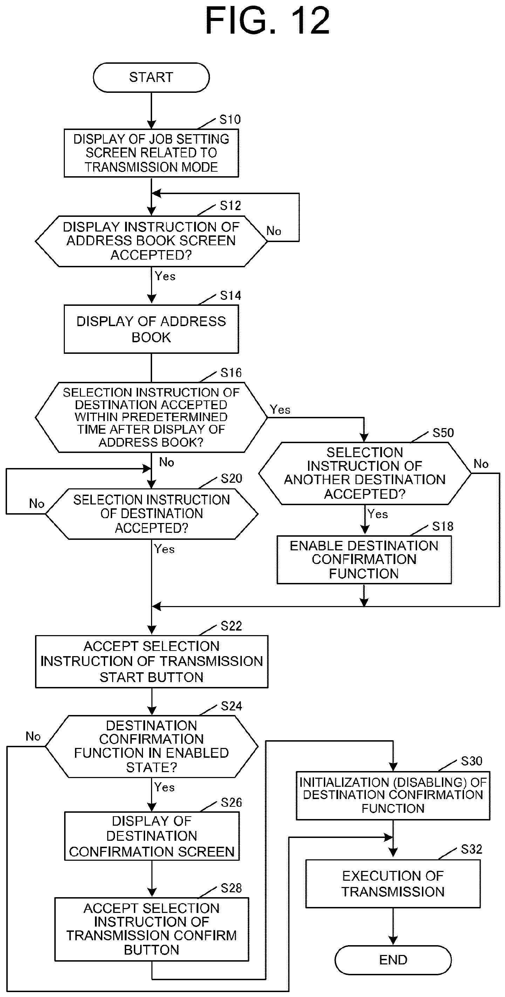

A flow of processing according to the third embodiment will be described using the flowchart of FIG. 12. Note that processing that can be the same processing as the processing described in FIG. 3 of the first embodiment is denoted by the same step number, and description thereof may be omitted.

When displaying the address book screen, the controller 11 activates a timer (not illustrated) such as a timer, and determines whether or not a selection instruction of a destination by a touch operation by the user or the like has been accepted within a predetermined time (for example, 500 ms) after the display of the address book (step S16). When determining that the selection instruction of the destination has been accepted, the controller 11 determines whether or not a selection instruction of another destination has been accepted (step S16: Yes -> step S50).

When determining that the selection instruction of another destination has been accepted, the controller 11 changes the destination confirmation function from disabled to enabled, and the process proceeds to step S22 (step S50; Yes -> step S18 -> step S22).

On the other hand, when determining that the selection instruction of another destination has not been accepted, the controller 11 maintains disabling of the destination confirmation function (omits the processing related to step S18), and the process proceeds to step S22 (step S50; No -> step S22).

### 3.2 Operation Example

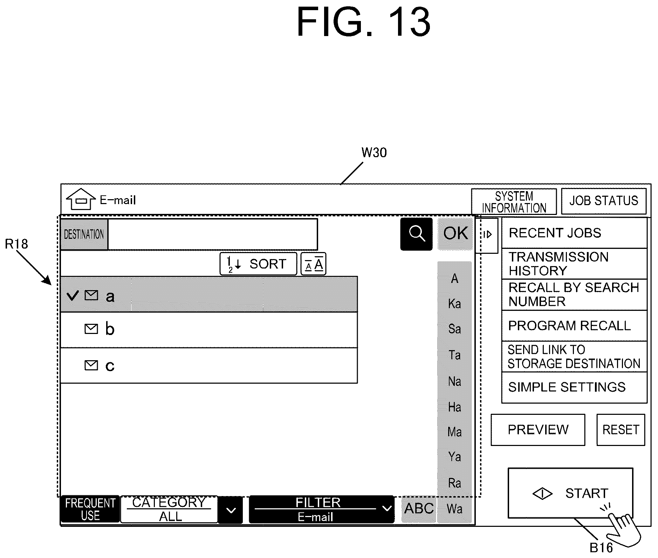

FIG. 13 is a diagram illustrating an operation example according to the third embodiment. FIG. 13 is a diagram corresponding to FIG. 6B of the first embodiment, and is an operation example in a case where "a" is the only destination for which selection is accepted within the predetermined time after the display of the address book screen W30.

As described above, according to the third embodiment, when the number of destinations for which selection is accepted within the predetermined time after the display of the address book screen is one, and thereafter a selection instruction for another destination is not accepted, it is considered that the probability of mis-selection by the user is low, and in such a case, by maintaining disabling of the destination confirmation function, it is possible to prevent mis-transmission of the image transmission job and reduce troublesomeness that the destination confirmation screen is displayed unnecessarily.

### 4 Fourth Embodiment

In a fourth embodiment, a form of an image forming apparatus will be described in which when the destination confirmation function is enabled and a selection instruction of a destination is not accepted within a predetermined time after the display of the address book screen, the destination confirmation function is changed from enabled to disabled.

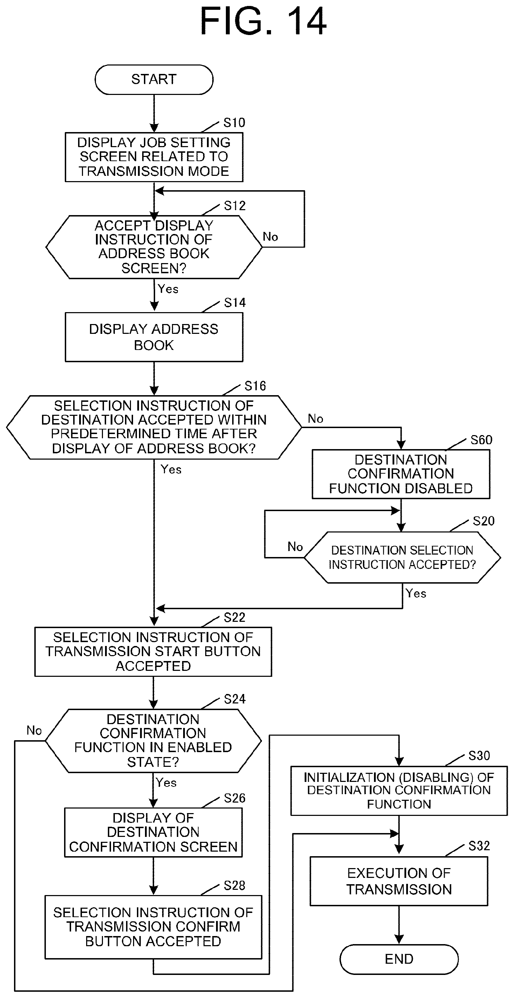

A flow of processing according to the fourth embodiment can be obtained by replacing the flowchart of FIG. 3 according to the first embodiment with the flowchart of FIG. 14. In FIG. 14, description is made assuming that the destination confirmation function is set to enabled via a system setting screen (not illustrated) or the like, and only processing different from that in FIG. 3 will be described.

When displaying the address book screen, the controller 11 activates a timer (not illustrated) such as a timer, and determines whether or not a selection instruction of a destination by a touch operation or the like by the user has been accepted within a predetermined time (for example, 500 ms) after the display of the address book screen (step S16).

When determining that the selection instruction of the destination has been accepted within the predetermined time after the display of the address book screen, the controller 11 accepts a selection instruction of the transmission start instruction button (step S16; Yes -> step S22). On the other hand, when determining that the selection instruction of the destination has not been accepted within the predetermined time after the display of the address book screen, the controller 11 changes the destination confirmation function from enabled to disabled, and determines whether or not a selection instruction of a destination by a touch operation or the like by the user has been accepted (step S16; No -> step S60 -> step S20). When determining that the selection instruction of the destination has been accepted, the controller 11 accepts a selection instruction of the transmission start instruction button (step S20; Yes -> step S22). Note that when determining that the selection instruction of the destination has not been accepted, the controller 11 waits until the selection of the destination is accepted (step S20; No).

As described above, according to the fourth embodiment, when the destination confirmation function is enabled and a selection instruction of a destination is not accepted within a predetermined time after the display of the address book screen as a selection screen, by changing the destination confirmation function from enabled to disabled, similarly to the first embodiment, it is possible to prevent mis-transmission of the image transmission job and reduce troublesomeness related to the display of the destination confirmation screen.

The present disclosure is not limited to the above-described embodiments, and various modifications are possible. That is, embodiments obtained by combining technical means modified as appropriate without departing from the gist of the present disclosure are also included in the technical scope of the present disclosure.

Further, although the above-described embodiments have parts described separately for convenience of description, it is needless to say that they may be combined and executed within a technically possible range.

Further, the program operating in each device in the embodiments is a program for controlling a CPU or the like (a program for causing a computer to function) so as to realize the functions of the above-described embodiments. Information handled by these devices is temporarily accumulated in a temporary storage device (for example, RAM) at the time of processing, and then stored in a storage device such as various ROMs (Read Only Memory) or HDDs, and read, modified, and written by the CPU as necessary.

Here, as a computer-readable non-transitory recording medium in which the program in the information processing apparatus is recorded, a semiconductor medium (for example, ROM, non-volatile memory card, etc.), an optical recording medium/magneto-optical recording medium (for example, DVD (Digital Versatile Disc), MO (Magneto Optical Disc), MD (Mini Disc), CD (Compact Disc), BD (Blu-ray (registered trademark) Disc, etc.)), a magnetic recording medium (for example, magnetic tape, flexible disk, etc.) or the like may be used. In this case, not only are the functions of the above-described embodiments realized by the program recorded on the recording medium being read by the computer of the information processing apparatus and executed by the computer, but also the functions of the present disclosure are realized by processing in cooperation with an operating system or other application programs based on the instructions of the program.

Further, when distributing to the market, the program can be stored in a portable recording medium and distributed, or transferred to a server computer connected via a network such as the Internet. In this case, it goes without saying that the storage device of the server computer is also included in the present disclosure.

Further, each functional block or various features of the devices used in the above-described embodiments can also be implemented and executed by an electric circuit, for example, an integrated circuit or a plurality of integrated circuits. An electric circuit designed to realize the functions described in the present specification may include a general-purpose processor, a digital signal processor (DSP), an application specific integrated circuit (ASIC), a field programmable gate array (FPGA), or other programmable logic devices, discrete gate or transistor logic, discrete hardware components, or a combination thereof. The general-purpose processor may be a microprocessor, or may be a conventional processor, controller, microcontroller, or state machine. The above-mentioned electric circuit may be configured by a digital circuit, or may be configured by an analog circuit. Further, when a technology for integration replacing current integrated circuits appears due to the progress of semiconductor technology, one or more aspects of the present disclosure can also use a new integrated circuit by the technology.

## Claims

1. A transmission apparatus (103) comprising:
a display (13) that displays a selection screen accepting a selection instruction of a destination of a transmission job; and
one or more controllers (11) that control enabling and disabling of a confirmation function for the destination selected via the selection screen,
wherein when the confirmation function is disabled and the selection instruction of the destination is accepted within a predetermined time after display of the selection screen, the one or more controllers (11) change the confirmation function from disabled to enabled.

2. The transmission apparatus (103) according to claim 1,
wherein, when the one or more controllers (11) have enabled the confirmation function, the one or more controllers (11) display a destination confirmation screen on the display (13).

3. The transmission apparatus (103) according to claim 2,
wherein the one or more controllers (11) display the destination confirmation screen in response to a transmission start instruction from a user.

4. The transmission apparatus (103) according to claim 2,
wherein the one or more controllers (11) display the destination confirmation screen together with a transmission confirm button for accepting a transmission execution instruction from a user.

5. The transmission apparatus (103) according to claim 4,
wherein the one or more controllers (11) display the transmission confirm button in an operable state after a predetermined display time has elapsed after display of the destination confirmation screen.

6. The transmission apparatus (103) according to claim 2,
wherein, when the confirmation function is disabled and a selection instruction of one destination is accepted within the predetermined time after display of the selection screen, and thereafter a selection instruction of another destination is not accepted, the one or more controllers (11) maintain disabling of the confirmation function.

7. The transmission apparatus (103) according to claim 1,
wherein, when the confirmation function is disabled and the selection instruction of the destination is not accepted within the predetermined time after display of the selection screen, the one or more controllers (11) maintain disabling of the confirmation function.

8. The transmission apparatus (103) according to claim 1,
wherein, when an operation is performed on an intermediate screen displayed from acceptance of a display instruction of the selection screen until display of the selection screen, and the selection instruction of the destination is accepted within the predetermined time after display of the selection screen, the one or more controllers (11) change the confirmation function from disabled to enabled.

9. The transmission apparatus (103) according to claim 1,
wherein, when the confirmation function is enabled and the selection instruction of the destination is not accepted within the predetermined time after display of the selection screen, the one or more controllers (11) change the confirmation function from enabled to disabled.

10. An image forming apparatus (100) comprising:
the transmission apparatus (103) according to claim 1; and
an image processing apparatus (105, 21) that processes an image to be transmitted by the transmission apparatus (103).

11. A method for controlling a transmission apparatus that displays a selection screen accepting a selection instruction of a destination of a transmission job and controls enabling and disabling of a confirmation function for the destination selected via the selection screen, the method comprising:
changing the confirmation function from disabled to enabled when the confirmation function is disabled and the selection instruction of the destination is accepted within a predetermined time after display of the selection screen.
